# EUROPÄISCHE PATENTSCHRIFT

(11) **EP 3 297 744 B1**
(45) Veröffentlichungstag und Bekanntmachung des Hinweises auf die Patenterteilung: **18.11.2020**
(21) Anmeldenummer: 16723079.6
(22) Anmeldetag: 12.05.2016
(51) Int. Cl.: B01D 45/06

(54) **VORRICHTUNG ZUR ABSCHEIDUNG VON PARTIKELN AUS EINEM GASSTROM**
DEVICE FOR THE PRECIPITATION OF PARTICLES FROM A GAS STREAM
DISPOSITIF POUR SÉPARER DES PARTICULES D'UN FLUX DE GAZ

(30) Priorität: 19.05.2015 DE 202015102560 U
(43) Veröffentlichungstag der Anmeldung: 28.03.2018
(73) Patentinhaber: WOCO Industrietechnik GmbH, 63628 Bad Soden-Salmünster (DE)
(72) Erfinder: KRAEHENBUEHL, David, 36119 Hattenhof (DE); FENSKE, Sebastian, 63110 Rodgau (DE); LUDWIG, Uwe, 63628 Bad Soden-Salmünster (DE)
(74) Vertreter: Schmid, Nils T.F.
(86) Internationale Anmeldenummer: PCT/EP2016/060637
(87) Internationale Veröffentlichungsnummer: WO 2016/184768

(56) Entgegenhaltungen:
- EP-A1- 1 262 223
- WO-A2-03/072222
- US-A- 4 263 027
- US-A1- 2010 126 479

## Beschreibung

Die vorliegende Erfindung betrifft eine Vorrichtung zum Abscheiden von flüssigen und/oder partikelförmigen Verunreinigungen aus einem Gasstrom umfassend zumindest ein erstes Leitelement und zumindest ein zweites Leitelement, wobei dem Gasstrom mittels des ersten Leitelements zumindest eine erste Richtungsänderung aufzwingbar ist und dem Gasstrom mittels des zweiten Leitelements zumindest eine zweite Richtungsänderung aufzwingbar ist.

Aus dem Stand der Technik sind verschiedene Abscheidevorrichtungen zum Abscheiden von flüssigen und/oder partikelförmigen Verunreinigungen aus einem Gasstrom, insbesondere einem Blow-by-Gasstrom in einer Brennkraftmaschine, insbesondere eines Kraftfahrzeugs, bekannt.

In einem beispielsweise aus einem Kurbelgehäuse abgeführten Gasstrom sind feste als auch flüssige Partikel, insbesondere Öltropfen, enthalten. Um eine Umweltbelastung zu reduzieren bzw. zu vermeiden, dass ölbeladener Gasstrom in den Luftansaugtrakt der Brennkraftmaschine geführt wird, werden verschiedene Abscheider eingesetzt, um diese Partikel aus dem Gasstrom zu entfernen.

Beispielsweise die DE 10 2004 010 583 B4 offenbart einen Ölabscheider zum Abscheiden von Öl aus einem Fluidstrom. Zur Abscheidung des Öls wird eine labyrinthartige Strömungsführung vorgeschlagen, wobei zur Erreichung dieser Strömungsführung in dem Strömungsverlauf Prallwände, die wenigstens in einem Teilbereich gummiartig verformbar sind, angeordnet werden.

Bei solchen Prallwänden trifft der Fluidstrom im Wesentlichen senkrecht auf die Prallwand, also entlang einer Normalenrichtung der Oberfläche der Prallwand auf diese auf, woraufhin aufgrund der Trägheit der in dem Fluidstrom enthaltenen flüssigen bzw. festen Partikel diese Partikel auf die Prallwand auftreffen während der Rest des Fluidstroms seitlich von der Aufprallfläche abfließt.

Nachteilig bei diesem Ölabscheider ist jedoch, dass der in dem Fluidstrom entstehende Staudruck relativ hoch ist, so dass der Abscheider einen hohen Strömungswiderstand für den Fluidstrom bzw. Gasstrom erzeugt.

Die EP 1 262 223 A1 beschreibt einen Trägheitsabscheider zur Entfernung von Tropfen aus einem Gasstrom mit Hilfe von Abscheidelamellen, welche konvexe und konkave Seiten aufweisen und in einem Gehäuse angeordnet sind.

Darüber hinaus sind aus dem Stand der Technik sogenannte Zyklonabscheider bekannt. Beispielsweise die DE 20 2007 003 292 U1 offenbart einen Ölabscheider mit mindestens einem Zyklon. Der Ölabscheider weist einen mit dem Kurbelgehäuse der Brennkraftmaschine verbindbaren Gaseinlass sowie einen mit einem Luftansaugtrakt der Brennkraftmaschine verbindbaren Gasauslass auf. Das Kurbelgehäuseentlüftungsgas tritt bei dem Gaseinlass in einen Innenraum des Zyklons ein und wird in diesem in eine schraubenförmige Drehströmung versetzt. In Folge der Zentrifugalkräfte werden mitgeführte Öltröpfchen nach außen getragen und schlagen sich an der Innenwand des Zyklons nieder. Von dort fließen Sie nach unten in einen Ölablass. Nachteilig bei diesen Abscheidern ist jedoch, dass sie einen vergleichsweise großen Bauraum einnehmen. Dieser steht oft in einen Motorraum eines Kraftfahrzeugs nicht zur Verfügung. Aufgabe der vorliegenden Erfindung ist es daher, eine Vorrichtung zur Abscheidung von flüssigen und/oder gasförmigen Partikeln aus einem Fluidstrom, insbesondere Gasstrom bereitzustellen, die die Nachteile des Stands der Technik überwindet, insbesondere einen kompakten Aufbau ermöglicht und gleichzeitig einen geringstmöglichen Strömungswiderstand für den Fluidstrom darstellt.

Diese Aufgabe wird erfindungsgemäß dadurch gelöst, dass der Fluidstrom im wesentlichen laminar entlang des ersten Leitelements und des zweiten Leitelements strömt.

Dabei kann eine erfindungsgemäße Vorrichtung gekennzeichnet sein durch zumindest ein drittes Leitelement, vorzugsweise eine Mehrzahl von dritten Leitelementen, wobei dem Fluidstrom mittels des dritten Leitelements zumindest eine dritte Richtungsänderung aufzwingbar ist und der Fluidstrom im Wesentlichen laminar entlang des dritten Leitelementes strömt, vorzugsweise mittels jedem dritten Leitelement eine von dem vorangehenden dritten Leitelement unterschiedliche dritte Richtungsänderung aufzwingbar ist.

Weiterhin wird mit der Erfindung für die Vorrichtung vorgeschlagen, dass der Fluidstrom im Wesentlichen entlang einer ersten Richtung in die Vorrichtung eintritt, die erste Richtungsänderung bewirkt, dass der Fluidstrom das erste Leitelement im Wesentlichen in eine zweite Richtung verlässt, die zweite Richtungsänderung bewirkt, dass der Fluidstrom das zweite Leitelement im Wesentlichen in eine dritte Richtung verlässt und/oder die dritte Richtungsänderung bewirkt, dass der Fluidstrom das dritte Leitelement im Wesentlichen in eine vierte Richtung verlässt, vorzugsweise zumindest ein erstes drittes Leitelement in eine erste vierte Richtung und zumindest ein zweites drittes Leitelement in einer zweite vierte Richtung.

Dabei ist besonders bevorzugt, dass die erste Richtung und die zweite Richtung, die zweite Richtung und die dritte Richtung und/oder die erste dritte Richtung und die zweite dritte Richtung in einem Winkel von 90° bis 180° zueinander verlaufen, insbesondere entgegengesetzt parallel verlaufen, und/oder der Fluidstrom die Vorrichtung entlang einer Austrittsrichtung, insbesondere der dritten Richtung, vierten Richtung und/oder zweiten vierten Richtung, verlässt, wobei die Austrittsrichtung vorzugsweise parallel zur ersten Richtung verläuft.

Auch wird mit der Erfindung vorgeschlagen, dass der Fluidstrom während der ersten Richtungsänderung, während der zweiten Richtungsänderung und/oder der dritten Richtungsänderung in eine Rotations-, Drall und/oder Drehbewegung versetzt wird.

Vorteilhafte Ausführungsformen der Erfindung können dadurch gekennzeichnet sein, dass das erste Leitelement zumindest eine erste Leitoberfläche aufweist, das zweite Leitelement zumindest eine zweite Leitoberfläche aufweist und/oder das dritte Leitelement zumindest eine dritte Leitoberfläche aufweist.

Bei der vorgenannten Ausführungsform ist besonders bevorzugt, dass der Fluidstrom im Wesentlichen tangential zu der ersten Leitoberfläche in das erste Leitelement eintritt, im Wesentlichen tangential zu der zweiten Leitoberfläche in das zweite Leitelement eintritt und/oder im Wesentlichen tangential zu der dritten Leitoberfläche in das dritte Leitelement eintritt.

Bei den beiden vorgenannten Ausführungsformen ist besonders bevorzugt, dass die erste Leitoberfläche, die zweite Leitoberfläche und/oder die dritte Leitoberfläche zumindest bereichsweise eine sphärische, elliptische, und/oder gewölbte Querschnittsform aufweist, vorzugweise zumindest bereichsweise die Querschnittsform eines Kreiszylinders, eines parabolischen Zylinders, eines elliptischen Zylinders und/oder einer gewölbten Oberfläche ausweist bzw. aufweisen.

Besonders vorteilhafte Ausführungsformen der Erfindung sehen vor, dass die erste Leitoberfläche zumindest bereichsweise zumindest einen ersten Krümmungsradius, die zweite Leitoberfläche zumindest bereichsweise zumindest einen zweiten Krümmungsradius und/oder die dritte Leitoberfläche zumindest bereichsweise zumindest einen dritten Krümmungsradius aufweist, wobei vorzugsweise der erste Krümmungsradius gleich dem zweiten Krümmungsradius und/oder gleich dem dritten Krümmungsradius ist, der erste Krümmungsradius größer als der zweite Krümmungsradius ist, der zweite Krümmungsradius größer als der dritte Krümmungsradius ist und/oder der erste Krümmungsradius größer als der dritte Krümmungsradius ist oder der erste Krümmungsradius kleiner als der zweite Krümmungsradius ist, der zweite Krümmungsradius kleiner als der dritte Krümmungsradius ist und/oder der erste Krümmungsradius kleiner als der dritte Krümmungsradius ist.

Weiterhin schlägt die Erfindung vor, dass der Fluidstrom mittels des ersten Leitelements, des zweiten Leitelements und/oder des dritten Leitelements, insbesondere in einer im Wesentlichen senkrecht zu der ersten Richtung verlaufenden ersten Ebene, labyrinthartig und/oder meanderartig fließt.

Eine erfindungsgemäße Vorrichtung kann ferner gekennzeichnet sein durch zumindest eine, vorzugsweise von dem zweiten Leitelement umfasste, insbesondere auf einer der zweiten Leitoberfläche abgewandten Seite des zweiten Leitelements angeordnete Leiteinrichtung, wobei der Fluidstrom mittels der Leiteinrichtung in die erste Richtung gezwungen wird.

Dabei ist besonders bevorzugt, dass das erste Leitelement, das zweite Leitelement und/oder das dritte Leitelement im Wesentlichen in der ersten Ebene angeordnet ist bzw. sind.

Auch wird mit der Erfindung vorgeschlagen, dass eine erfindungsgemäße Vorrichtung gekennzeichnet ist durch zumindest einen, vorzugsweise sich in der ersten Ebene erstreckenden, Tragrahmen, wobei das erste Leitelement, das zweite Leitelement und/oder das dritte Leitelement zumindest indirekt an dem Tragrahmen gelagert ist bzw. sind.

Weiter ist vorgesehen, dass das erste Leitelement, das zweite Leitelement und/oder das dritte Leitelement, insbesondere das erste dritte Leitelement und/oder das zweite dritte Leitelement, insbesondere gegen zumindest eine mittels zumindest einer, vorzugsweise zumindest bereichsweise einstückig mit dem ersten Leitelement, dem zweiten Leitelement und/oder dritte Leitelement ausgebildete Rückstelleinrichtung aufgebauten Rückstellkraft, bewegbar relativ zu dem Tragrahmen gelagert ist bzw. sind, vorzugsweise das erste Leitelement relativ zu dem zweiten Leitelement, das dritte Leitelement relativ zu dem zweiten Leitelement und/oder das zweite dritte Leitelement relativ zu dem ersten dritten Leitelement bewegbar gelagert ist bzw. sind.

Weiterhin wird mit der Erfindung vorgeschlagen, dass die Rückstelleinrichtung zumindest eine Federelement, vorzugsweise Blattfeder, Schraubenfeder und/oder Elastomerfeder umfasst.

Eine erfindungsgemäße Abscheidevorrichtung kann auch dadurch gekennzeichnet sein, dass ein Abstand zwischen dem zweiten Leitelement und dem ersten Leitelement, zwischen dem dritten Leitelement und dem zweiten Leitelement und/oder zwischen dem zweiten dritten Leitelement und dem ersten dritten Leitelement, vorzugsweise in Abhängigkeit von einem Durchflussparameter des Gasstroms, wie einem dynamischen Druck, einem statischen Druck, einer Durchflussmenge und/oder einer Durchflussgeschwindigkeit veränderbar ist, wobei vorzugsweise ein von Null unterschiedlicher minimaler Abstand zwischen dem zweiten Leitelement und dem ersten Leitelement, zwischen dem dritten Leitelement und dem zweiten Leitelement und/oder zwischen dem zweiten dritten Leitelement und dem ersten dritten Leitelement nicht unterschritten wird.

Besonders bevorzugt ist, dass das erste Leitelement zumindest bereichsweise in das zweite Leitelement hineinreicht, das zweite Leitelement zumindest bereichsweise in das erste Leitelement hineinreicht, das zweite Leitelement zumindest bereichsweise in das dritte Leitelement hineinreicht, das dritte Leitelement zumindest bereichsweise in das zweite Leitelement hineinreicht, das erste dritte Leitelement zumindest bereichsweise in das zweite dritte Leitelement hineinreicht und/oder das zweite dritte Leitelement zumindest bereichsweise in das erste dritte Leitelement hineinreicht.

Besonders vorteilhafte Ausführungsformen können gekennzeichnet sein durch eine Mehrzahl von, insbesondere in der ersten Ebene angeordneten, ersten Leitelementen, zweiten Leitelementen und/oder dritten Leitelementen, wobei vorzugsweise zumindest zwei erste Leitelemente, zwei zweite Leitelemente und/oder zwei dritte Leitelemente zumindest bereichsweise in einem ausgebildet sind, insbesondere eine w-förmige Querschnittsform aufweisen.

Schließlich wird für die erfindungsgemäße Vorrichtung vorgeschlagen, dass der Tragrahmen, das erste Leitelement, das zweite Leitelement und/oder das dritte Leitelement zumindest bereichsweise ein Kunststoffmaterial, insbesondere Spritzgussteil umfasst und/oder das erste Leitelement, das zweite Leitelement, das dritte Leitelement und/oder das Rückstellement zumindest ein Metall, vorzugsweise ein Blechmaterial, vorzugweise in Form zumindest eines Blechstanzteils, umfasst bzw. umfassen.

Der Erfindung liegt somit die überraschende Erkenntnis zu Grunde, dass durch eine geeignete Formgebung von entsprechenden Leitelementen innerhalb eines Abscheiders eine labyrinthartige Strömungsführung für ein Fluidstrom, insbesondere Gasstrom, bereitgestellt werden kann, um eine bestmögliche Abscheidung von Partikeln aus dem Fluidstrom zu erreichen, gleichzeitig jedoch ein Strömungswiderstand für den Fluidstrom nicht unnötig vergrößert wird.

Dazu wird vorgeschlagen, dass der Fluidstrom so geführt wird, dass er im wesentlichen laminar entlang einer Oberfläche der Leitelemente geführt wird, so dass die Ausbildung von Verwirbelungen, die zu einer Erhöhung des Strömungswiderstands und des Staudrucks führen würden, vermieden werden. Gleichzeitig wird ein hoher Wirkungsgrad für die als passiven Abscheider wirkende Vorrichtung erreicht, d.h. der Abscheider benötigt keine zusätzliche Antriebsenergie, indem der Fluidstrom in eine Rotations- bzw. Drehbewegung versetzt wird, so dass die Partikel aufgrund der Zentrifugalkräfte aus dem Fluidstrom abgeschieden werden.

Somit werden also die positiven Eigenschaften eines Zyklons ausgenutzt, ohne jedoch einen vergrößerten Bauraum nutzen zu müssen. Dazu wird der Fluidstrom mehrfach umgelenkt, so dass eine im Wesentlichen labyrinth- bzw. meanderförmige Bewegung des Fluidstroms in einer Ebene stattfindet und aufgrund der Mehrfachumleitungen ein hoher Abscheidegrad erreicht wird. Grundsätzlich ist jedoch für einen ausreichend hohen Abscheidegrad bereits eine erste starke Umlenkung ausreichend. Bei dieser treten durch den kleinen Radius in Kombination mit einer hohen Strömungsgeschwindigkeit besonders hohe Zentrifugalkräfte auf, mit denen selbst sehr kleine Partikel abgeschieden werden können. Eine "Mehrfachumlenkung" bzw. die zweite Umlenkung ist dann lediglich dafür vorgesehen, um die Strömung in die gewünschte Endrichtung umzulenken, beispielsweise damit die dritte Strömungsrichtung in etwa der ersten Strömungsrichtung entspricht. Mit anderen Worten erfolgt die Partikelabscheidung über Zentrifugalkräfte, wobei durch die Aufteilung des Fluidstroms, die Beschleunigung und die Umlenkung, durch die der Fluidstrom in eine Drehbewegung versetzt wird, ein hoher Wirkungsgrad erzielt wird.

Aufgrund der Umlenkung des Fluidstroms, insbesondere indem der Fluidstrom im Wesentlichen tangential auf die Oberfläche des Trennelements auftritt, folgt der Fluidstrom der gekrümmten Oberflächenkontur des Abscheiders bzw. Leitelements ähnlich einem Eintrittsbereich eines Zyklons und einer sich daran anschließenden Umlenkung über einen Teilumfang, beispielsweise eine erste halbe kreisförmige Umlenkung, in einem Zyklon. Indem eine Vielzahl von ersten bzw. zweiten Leitelementen verwendet wird, wird der Fluidstrom in eine Vielzahl von Umlenkungsbereichen aufgeteilt, wobei die Anzahl und der Radius der Leitelemente einem Auslegungsvolumstroms der jeweiligen Brennkraftmaschine angepasst wird. Ein erstes Leitelement bewirkt also die Umlenkung des Fluidstroms aus einer ersten Richtung in eine zweite Richtung, insbesondere eine Richtung, die entgegengesetzt parallel zu der ersten Richtung verläuft. Durch eine Gegenkontur, die in Form eines zweiten Leitelements ausgebildet ist, wird dann eine zweite Richtungsänderung in den Fluidstrom induziert, insbesondere derartig, dass der Fluidstrom das zweite Leitelement und damit den Abscheider nach einer Umlenkung, wodurch der Fluidstrom in eine Drehbewegung versetzt wird, in einer Richtung verlässt, die im wesentlichen gleichgerichtet parallel zur der ersten Richtung verläuft.

Die Anzahl der vorhandenen Leitelemente kann noch weiter erhöht werden, insbesondere können eine oder mehrere dritte Leitelemente vorgesehen sein, in die der Fluidstrom nach Verlassen des zweiten Leitelements eintritt und dort einfach oder mehrfach umgelenkt wird. Besonders bevorzugt ist, dass jedes der Leitelemente eine Umlenkung des Fluidstroms um 180° Grad bewirkt, also der Fluidstrom in jedem der Leitelemente einen Halbkreisbogen durchläuft. Auf diese Weise wird die größtmögliche Zentrifugalkraft innerhalb des Fluidstroms aufgebaut und gleichzeitig eine geringstmögliche Bauhöhe für den Abscheider erreicht. Auch kann so der Fluidstrom dann meander- bzw. labyrinthförmig entlang einer Ebene, die senkrecht zu der Eintrittsrichtung des Fluidstroms in die Vorrichtung ist, geführt werden, um dann in die Richtung, wie er in den Abscheider eingetreten ist, abzufließen. Durch die Nebeneinanderanordnung einer Vielzahl von ersten, zweiten und dritten Leitelementen, insbesondere in der zuvor beschriebenen ersten Ebene, kann ein ausreichender Volumendurchsatz durch den Abscheider sichergestellt werden, insbesondere der Aufbau eines erhöhten Staudrucks in den Fluidstrom vermieden werden.

Die jeweiligen Leitelemente können verschiedene Oberflächenformen aufweisen. So können diese kreisförmig- bzw. spährisch aber auch elliptisch, parabolisch oder dergleichen ausgebildet sein. Auf diese Weise kann sichergestellt werden, dass eine größtmögliche Laminarität der Strömung erreicht wird, gleichzeitig jedoch größtmögliche Zentrifugalkräfte in dem Fluidstrom erzeugt werden. Die Krümmungsradien der einzelnen Leitelemente können sich unterscheiden, so kann auf diese Weise für jede der Umlenkungen eine gleichmäßiges Abscheidegrad sichergestellt werden, wobei vorzugsweise der Krümmungsradius von Leitelement zu Leitelement abnimmt. Auf diese Weise können bei der ersten Umlenkung in dem ersten Leitelement die größten Partikel abgeschieden werden, für die geringere Zentrifugalkräfte für deren Abscheidung notwendig sind. Mit zunehmender Umlenkung kann der Krümmungsradius dann abnehmen, so dass immer größere Zentrifugalkräfte in dem Fluidstrom erzeugt werden, so dass auch kleinere Partikel effizient abgeschieden werden können. Auch kann alternativ der Krümmungsradius von Leitelement zu Leitelement zunehmen. So wird die Abscheidung von größeren Partikeln, welche in den vorherigen Umlenkungen aus kleinen Partikeln entstanden sind, ermöglicht. In der ersten starken Umlenkung werden dann bereits alle kleinen und großen Partikel abgeschieden. Die in der ersten Umlenkung abgeschiedenen Partikel beispielsweise große und kleinen Ölpartikeln, können als Wandfilm entlang der Leitoberfläche bedingt durch die hohen Strömungsgeschwindigkeiten mitgetragen und am Ende der Leitoberfläche als konglomerierte große Partikel, wie Öltropfen, mitgerissen werden. Diese großen Partikel werden jedoch bereits durch geringere Zentrifugalkräfte, wie sie in den nachfolgenden Umlenkungen entstehen (geringere Zentrifugalkräfte da größere Querschnitte, dadurch kleinere Strömungsgeschwindigkeiten und größere Krümmungsradien) wieder abgeschieden. Von hier können die abgeschiedenen Partikel in den Bereichen geringerer Strömungsgeschwindigkeiten ablaufen.

Vorzugsweise reichen die Leitelemente zumindest bereichsweise ineinander, so dass ein möglichst fließender Übergang des Fluidstroms von einem Leitelement zu einem nachfolgenden Leitelement erreicht werden kann, insbesondere eine bestmögliche Laminarität des Gasstroms sichergestellt wird.

Die gesamte Vorrichtung kann einstückig ausgebildet sein, insbesondere können an einem Tragrahmen die jeweiligen Leitelemente einstückig ausgebildet sein. Dies ermöglicht es insbesondere, dass die Vorrichtung als kostengünstiges Kunststoffspritzteil ausgebildet werden kann. Darüber hinaus kann auch vorgesehen sein, dass die Abscheidevorrichtung eine variable Geometrie aufweist. Dabei ist besonders bevorzugt, dass die jeweiligen Leitelemente abwechselnd ortsfest zu dem Tragrahmen und bewegbar relativ zu dem Tragrahmen angeordnet sind. Beispielsweise kann das erste Leitelement bewegbar relativ zu dem Tragrahmen ausgebildet sein, während die Gegenkontur bzw. das zweite Leitelement fest relativ zu dem Tragrahmen angeordnet ist. Dabei ist bevorzugt, dass die Bewegbarkeit des ersten Leitelements gegen eine Rückstelleinrichtung, insbesondere ein Federelement, beispielsweise ein Blattfederelement, welches einstückig mit dem Leitelement ausgebildet ist, erfolgt. Dies ermöglicht es, dass der Strömungsquerschnitt in Abhängigkeit von einem Volumenstrom vergrößert werden kann. Auf diese Weise wird zusätzlich der Aufbau eines überhöhten Staudrucks in den Fluidstrom vermieden.

Somit bietet die Erfindung den Vorteil, dass eine Abscheidevorrichtung bereitgestellt wird, die kostengünstig herstellbar ist, einen kompakten Aufbau aufweist, flexibler einsetzbar ist, insbesondere mit geringen Aufwand an unterschiedlicher Rahmenbedingung angepasst werden kann, sowie in die eine Bypassfunktion integrierbar ist. So kann beispielsweise innerhalb des Tragrahmens eine Bypassöffnung, die insbesondere über ein Steuerbypassventil geöffnet bzw. geschlossen werden kann, integriert werden, durch die der Fluidstrom vollständig oder teilweise unter Umgehung der Leitelemente von dem Eintritts- in den Austrittsbereich des Abscheiders gelangen kann.

Weitere Merkmale und Vorteile der Erfindung ergeben sich aus der nachfolgenden Beschreibung, in der bevorzugte Ausführungsformen der Erfindung anhand von schematischen Zeichnungen erläutert sind.

Dabei zeigt:
- Figur 1: eine schematische Aufsicht auf eine erste Ausführungsform einer erfindungsgemäße Abscheidevorrichtung;
- Figur 2: eine schematische Querschnittsansicht der Abscheidevorrichtung der Figur 1 aus Richtung A in Figur 1;
- Figur 3: eine schematische Querschnittsansicht der Abscheidevorrichtung der Figuren 1 und 2 aus Richtung A in Figur 1;
- Figur 4: eine perspektive Aufsicht auf eine weitere Abscheidevorrichtung (nicht erfindungsgemäß); und
- Figur 5: eine Querschnittsansicht der Abscheidevorrichtung der Figur 4 aus Richtung B in Figur 4.

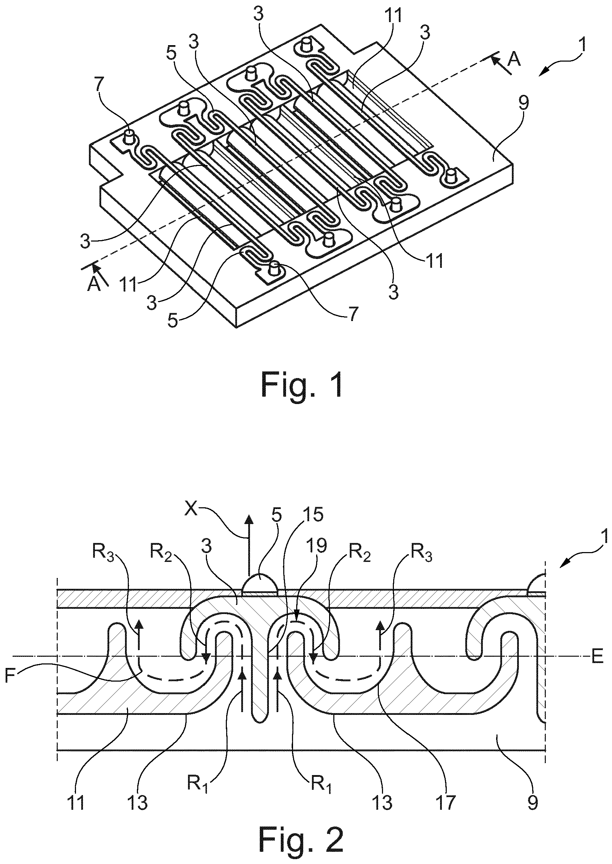

In Figur 1 ist eine schematische Aufsicht auf eine Abscheidevorrichtung 1 gemäß der Erfindung dargestellt. In Figur 1 ist die Aufsicht auf die Austrittsseite der Abscheidevorrichtung 1 dargestellt. Die Abscheidevorrichtung 1 umfasst eine Mehrzahl von ersten Leitelementen 3. Genauer weist die Abscheidevorrichtung sechs funktional, d.h. bezüglich des Gasstroms, parallel geschaltete erste Leitelemente 3 auf.

Die Leitelemente 3 sind als Blechstanzteile ausgebildet und einstückig mit Rückstellelementen in Form von Federelementen 5 ausgebildet. Die Federelemente 5 sind an Haltepunkten 7 mit einem Rahmen 9 der Abscheidevorrichtung 1 festgelegt. Der Rahmen 9 umfasst insbesondere ein Kunststoffspritzteil.

Einstückig mit dem Rahmen 9 sind zweite Leitelemente 11 ausgebildet. In der Abscheidevorrichtung 1 sind ebenfalls sechs zweite Leitelemente 11 ausgebildet.

In Figur 2 ist eine Querschnittsansicht der Abscheidevorrichtung 1 der Figur 1 entlang der Ebene A dargestellt. Wie insbesondere Figur 2 zu entnehmen ist, tritt ein Gasstrom entlang einer Richtung R₁ in das erste Leitelement 3 ein. Dabei sind auf der Rückseite des zweiten Leitelements 11 Leiteinrichtung 13 ausgebildet. Diese Leiteinrichtung 13 bewirkt, dass der Gasstrom im Wesentlichen tangential zu einer ersten Leitoberfläche 15 des ersten Leitelements in dasselbe eintritt. Die Leitoberfläche 15 ist darüber hinaus bereichsweise im Wesentlichen sphärisch ausgebildet, so dass der Gasstrom eine Richtungsänderung erfährt, insbesondere das erste Leitelement 3 in eine Richtung R₂ verlässt. Hierbei erfolgt in der dargestellten Ausführungsform eine Umlenkung um 180°, d. h. die zweite Richtung R₂ ist entgegengesetzt parallel zu der ersten Richtung R₁ angeordnet.

Aufgrund der sphärischen Ausbildung der ersten Leitoberfläche 15 erfolgt eine im Wesentlichen laminare Strömungsführung des Gasstroms und gleichzeitig wird in den Gasstrom eine Dreh- bzw. Drallbewegung induziert, die eine Abscheidung von Öltropfen bzw. Partikeln in eine Richtung auf die Leitoberfläche 15 hin bewirkt. Die an der Leitoberfläche 15 sich ansammelnden Partikel fließen in die Papierebene der Figur 2 hinein und werden über einen nicht dargestellten Ablauf aus der Abscheidevorrichtung 1 abgeführt.

Wie darüber hinaus Figur 2 zu entnehmen ist, reicht das zweite Leitelement 11 teilweise in das erste Leitelement 3 hinein.

Das zweite Leitelement 11 weist eine Leitoberfläche 17 auf. Wie insbesondere der Figur 2 zu entnehmen ist, weist die zweite Leitoberfläche 17 einen größeren Radius als die erste Leitoberfläche 15 auf. Auf diese Weise erfolgt eine erneute Umlenkung des Fluidstroms aus der zweiten Richtung R₂ in eine dritte Richtung R₃.

Da auch in dem zweiten Leitelement 11 eine Umlenkung um ungefähr 180° erfolgt, verläuft die dritte Richtung R₃ im Wesentlichen parallel gleichgerichtet zu der ersten Richtung R₁. Anschließend verlässt der Gasstrom die Abscheidevorrichtung 1.

Wie Figur 2 ferner zu entnehmen ist, erfolgt also eine labyrinth- bzw. meanderförmige Umlenkung des Gasstroms entlang der Ebene E.

In der Ebene E erstreckt sich einerseits der Tragrahmen 9 und andererseits ist die Ebene E senkrecht zu der ersten Richtung R₁ ausgerichtet. In nicht dargestellten Ausführungsformen kann vorgesehen sein, dass sich entlang des Gasstroms an das zweite Leitelement ein weiteres drittes Leitelement, insbesondere eine Mehrzahl von dritten Leitelementen anschließt. Auf diese Weise kann eine zusätzliche Mehrfachumlenkung des Gasstroms erzeugt werden und so der Abscheidegrad weiter erhöht werden.

Darüber hinaus weist die Abscheidevorrichtung 1, wie in den Figuren 1 bis 3 dargestellt, mehrere parallel geschaltete erste und zweite Leitelemente 3, 11 auf. Auf diese Weise wird der eintretende Gasstrom in eine Vielzahl von Teilströmen aufgeteilt, die jeweils, wie zuvor beschrieben, labyrinth- bzw. meanderförmig jeweils durch ein in Serie geschaltetes erstes Trennelement 3, zweites Trennelement 11 und ein optionales drittes Leitelement derartig abgelenkt werden, dass in den Gasstrom mehrfach eine Dreh- bzw. Drallbewegung induziert wird und so aufgrund von Zentrifugalkräften entsprechende Partikel abgeschieden werden.

Bei der in den Figuren 1 bis 3 dargestellte Ausführungsform ist das erste Trennelement 3 bewegbar relativ zu dem zweiten Trennelement 11 bzw. dem Tragrahmen 9 gelagert. Kommt es zu einer Erhöhung des Fluiddruckes bzw. einer Erhöhung des Fluidstroms bewegt sich das erste Trennelement in der Figur 2 in Richtung X, also entlang einer Normalenrichtung der Ebene E. Hierbei ist jedoch bevorzugt, dass ein minimaler Abstand zwischen dem ersten Leitelement 3 und dem zweiten Leitelement 11 nicht unterschritten wird, also ein minimaler Spalt 19 zwischen dem ersten Leitelement 3 und dem zweiten Leitelement 11 verbleibt.

Wie darüber hinaus den Figuren 1 bis 3 zu entnehmen ist, ist besonders bevorzugt, dass mehrere erste und zweite Leitelemente 3, 11 zumindest bereichsweise einstückig ausgebildet sind. Mit anderen Worten wird so erreicht, dass ein erster Teil des Gasstroms in eine erste Richtung der Ebene E und ein zweiter Teil des Fluidstroms in eine entgegengesetzte zweite Richtung innerhalb der Ebene E labyrinth- bzw. meanderartig geführt wird.

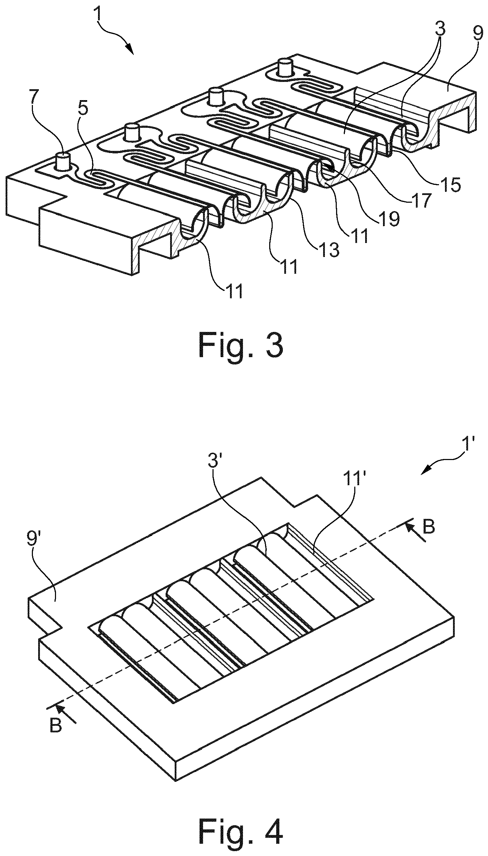

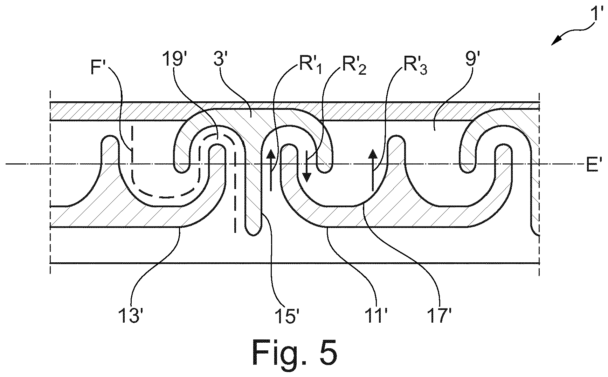

In den Figuren 4 und 5 ist eine weitere Abscheidevorrichtung 1' dargestellt. Die Elemente der Abscheidevorrichtung 1', die denjenigen der Abscheidevorrichtung 1 entsprechen, tragen das gleiche Bezugszeichen, allerdings einfach gestrichen.

Im Gegensatz zu der ersten Ausführungsform ist bei der Abscheidevorrichtung 1' das erste Leitelement 3' ebenfalls einstückig mit dem Rahmen 9' ausgebildet. Somit sind sowohl das erste Leitelement 3' als auch das zweite Leitelement 11' einstückig mit dem Rahmen 9' ausgebildet. Insbesondere wird also auf das Federelement 5 verzichtet. Auf diese Weise ergibt sich ein noch einfacherer konstruktiver Aufbau der Abscheidevorrichtung, wodurch eine deutliche Kostenreduzierung erreicht wird. Auch ergibt sich ein konstruktiv einfacherer Aufbau und damit eine geringere Fehleranfälligkeit der Abscheidevorrichtung.

Die in der vorstehenden Beschreibung, in den Ansprüchen und in den Figuren dargestellten Merkmale können sowohl einzeln als auch in beliebiger Kombination wesentlich für die Erfindung in ihren verschiedenen Ausführungsform sein.

### Bezugszeichenliste

- 1, 1': Abscheidevorrichtung
- 3, 3': Leitelement
- 5: Federelement
- 7: Haltepunkt
- 9, 9': Rahmen
- 11, 11': Leitelement
- 13, 13': Leiteinrichtung
- 15, 15': Leitoberfläche
- 17, 17': Leitoberfläche
- 19, 19': Spalt

- A, B: Richtung
- F, F': Fluidstrom
- R₁, R₁': Richtung
- R₂, R₂': Richtung
- R₃, R₃': Richtung
- E, E': Ebene
- X: Richtung

## Patentansprüche

1. Vorrichtung (1, 1') zum Abscheiden von flüssigen und/oder partikelförmigen Verunreinigungen aus einem Fluidstrom (F, F') umfassend zumindest ein erstes Leitelement (3, 3') und zumindest ein zweites Leitelement (11, 11'), wobei dem Fluidstrom (F, F') mittels des ersten Leitelements (3, 3') zumindest eine erste Richtungsänderung aufzwingbar ist und dem Fluidstrom(F, F') mittels des zweiten Leitelements (11, 11') zumindest eine zweite Richtungsänderung aufzwingbar ist, **dadurch gekennzeichnet, dass**
der Fluidstrom (F, F') im Wesentlichen laminar entlang des ersten Leitelements (3, 3') und des zweiten Leitelements (11,11') strömt und die Vorrichtung zumindest einen Tragrahmen (9, 9') umfasst wobei das erste Leitelement (3, 3') und/oder das zweite Leitelement (11, 11') zumindest indirekt derartig an dem Tragrahmen (9, 9') gelagert ist bzw. sind, dass das erste Leitelement (3, 3') und/oder das zweite (5) Leitelement gegen zumindest eine mittels zumindest einer Rückstelleinrichtung aufgebauten Rückstellkraft bewegbar relativ zu dem Tragrahmen (9, 9') gelagert ist bzw. sind.

2. Vorrichtung nach Anspruch 1, **gekennzeichnet durch**
zumindest ein drittes Leitelement, vorzugsweise eine Mehrzahl von dritten Leitelementen, in die der Fluidstrom nach Verlassen des zweiten Leitelementes eintritt, wobei dem Fluidstrom (F, F') mittels des dritten Leitelements zumindest eine dritte Richtungsänderung aufzwingbar ist und der Fluidstrom (F, F') im Wesentlichen laminar entlang des dritten Leitelementes strömt, vorzugsweise mittels jedem dritten Leitelement eine von dem vorangehenden dritten Leitelement unterschiedliche dritte Richtungsänderung aufzwingbar ist.

3. Vorrichtung nach Anspruch 1 oder 2, **dadurch gekennzeichnet, dass**
der Fluidstrom (F, F') im Wesentlichen entlang einer ersten Richtung (R₁, R₁') in die Vorrichtung (1, 1') eintritt, die erste Richtungsänderung bewirkt, dass der Fluidstrom (F, F') das erste Leitelement (3, 3') im Wesentlichen in eine zweite Richtung (R₂, R₂') verlässt, die zweite Richtungsänderung bewirkt, dass der Fluidstrom (F, F') das zweite Leitelement (11, 11') im Wesentlichen in eine dritte Richtung (R₃, R₃') verlässt und/oder die dritte Richtungsänderung bewirkt, dass der Fluidstrom (F, F') das dritte Leitelement im Wesentlichen in eine vierte Richtung verlässt, vorzugsweise zumindest ein erstes drittes Leitelement in eine erste vierte Richtung und zumindest ein zweites drittes Leitelement in einer zweite vierte Richtung.

4. Vorrichtung nach Anspruch 3, **dadurch gekennzeichnet, dass**
die erste Richtung (R₁, R₁') und die zweite Richtung (R₂, R₂'), die zweite Richtung (R₂, R₂') und die dritte Richtung und/oder die erste dritte Richtung und die zweite dritte Richtung in einem Winkel von 90° bis 180° zueinander verlaufen, insbesondere entgegengesetzt parallel verlaufen, und/oder der Fluidstrom (F, F') die Vorrichtung (1, 1') entlang einer Austrittsrichtung, insbesondere der dritten Richtung (R₃, R₃'), vierten Richtung und/oder zweiten vierten Richtung, verlässt, wobei die Austrittsrichtung vorzugsweise parallel zu der ersten Richtung (R₁, R₁') verläuft.

5. Vorrichtung nach einem der vorangehenden Ansprüche, **dadurch gekennzeichnet, dass**
der Fluidstrom (F, F') während der ersten Richtungsänderung, während der zweiten Richtungsänderung und/oder der dritten Richtungsänderung in eine Rotations-, Drall und/oder Drehbewegung versetzt wird.

6. Vorrichtung nach einem der vorangehenden Ansprüche, **dadurch gekennzeichnet, dass**
das erste Leitelement (3, 3') zumindest eine erste Leitoberfläche (15, 15') aufweist, das zweite Leitelement (11, 11') zumindest eine zweite Leitoberfläche (17, 17') aufweist und/oder das dritte Leitelement zumindest eine dritte Leitoberfläche aufweist, wobei vorzugsweise der Fluidstrom (F, F') im Wesentlichen tangential zu der ersten Leitoberfläche (15, 15') in das erste Leitelement (3, 3') eintritt, im Wesentlichen tangential zu der zweiten Leitoberfläche (17, 17') in das zweite Leitelement (11, 11') eintritt und/oder im Wesentlichen tangential zu der dritten Leitoberfläche in das dritte Leitelement eintritt.

7. Vorrichtung nach Anspruch 6, **dadurch gekennzeichnet, dass**
(i) die erste Leitoberfläche (15, 15'), die zweite Leitoberfläche (17, 17') und/oder die dritte Leitoberfläche zumindest bereichsweise eine sphärische, elliptische, und/oder gewölbte Querschnittsform aufweist, vorzugweise zumindest bereichsweise die Querschnittsform eines Kreiszylinders, eines parabolischen Zylinders, eines elliptischen Zylinders und/oder einer gewölbten Oberfläche ausweist bzw. aufweisen, und/oder
(ii) die erste Leitoberfläche (15, 15') zumindest bereichsweise zumindest einen ersten Krümmungsradius, die zweite Leitoberfläche (17, 17') zumindest bereichsweise zumindest einen zweiten Krümmungsradius und/oder die dritte Leitoberfläche zumindest bereichsweise zumindest einen dritten Krümmungsradius aufweist, wobei vorzugsweise der erste Krümmungsradius gleich dem zweiten Krümmungsradius und/oder gleich dem dritten Krümmungsradius ist,
der erste Krümmungsradius größer als der zweite Krümmungsradius ist, der zweite Krümmungsradius größer als der dritte Krümmungsradius ist und/oder der erste Krümmungsradius größer als der dritte Krümmungsradius ist, oder
der erste Krümmungsradius kleiner als der zweite Krümmungsradius ist, der zweite Krümmungsradius kleiner als der dritte Krümmungsradius ist und/oder der erste Krümmungsradius kleiner als der dritte Krümmungsradius ist.

8. Vorrichtung nach einem der vorangehenden Ansprüche, **dadurch gekennzeichnet, dass**
der Fluidstrom (F, F') mittels des ersten Leitelements (3, 3'), des zweiten Leitelements (11, 11') und/oder des dritten Leitelements, insbesondere in einer im Wesentlichen senkrecht zu der ersten Richtung (R₁, R₁') verlaufenden ersten Ebene (E, E'), labyrinthartig und/oder meanderartig fließt.

9. Vorrichtung nach einem der vorangehenden Ansprüche, **gekennzeichnet durch** zumindest eine, vorzugsweise von dem zweiten Leitelement (11, 11') umfasste, insbesondere auf einer der zweiten Leitoberfläche (17, 17') abgewandten Seite des zweiten Leitelements (11, 11') angeordnete Leiteinrichtung (13, 13'), wobei der Fluidstrom (F, F') mittels der Leiteinrichtung (13, 13') in die erste Richtung (R₁, R₁') gezwungen wird.

10. Vorrichtung nach einem der vorangehenden Ansprüche, **dadurch gekennzeichnet, dass**
(i) das erste Leitelement (3, 3'), das zweite Leitelement (11, 11') und/oder das dritte Leitelement im Wesentlichen in der ersten Ebene (E, E') angeordnet ist bzw. sind, und/oder
(ii) sich der Tragrahmen (9,9') in der ersten Ebene (E, E') erstreckt und/oder das dritte Leitelement zumindest indirekt an dem Tragrahmen (9, 9') gelagert ist bzw. sind, wobei vorzugsweise
das dritte Leitelement, insbesondere das erste dritte Leitelement und/oder das zweite dritte Leitelement, gegen die mittels der Rückstelleinrichtung (5) aufgebaute Rückstellkraft bewegbar gelagert ist, die Rückstelleinrichtung (5) einstückig mit dem ersten Leitelement (3, 3'), dem zweiten Leitelement und/oder dritte Leitelement ausgebildet ist, und/oder das erste Leitelement (3, 3') relativ zu dem zweiten Leitelement (11, 11'), das dritte Leitelement relativ zu dem zweiten Leitelement und/oder das zweite dritte Leitelement relativ zu dem ersten dritten Leitelement bewegbar gelagert ist bzw. sind.

11. Vorrichtung nach einem der vorangehenden Ansprüche, **dadurch gekennzeichnet, dass**
die Rückstelleinrichtung zumindest ein Federelement (5), vorzugsweise
Blattfeder, Schraubenfeder und/oder Elastomerfeder umfasst.

12. Vorrichtung nach einem der vorangehenden Ansprüche, **dadurch gekennzeichnet, dass**
ein Abstand zwischen dem zweiten Leitelement (11, 11') und dem ersten Leitelement (3, 3'), zwischen dem dritten Leitelement und dem zweiten Leitelement und/oder zwischen dem zweiten dritten Leitelement und dem ersten dritten Leitelement, vorzugsweise in Abhängigkeit von einem Durchflussparameter des Fluidstroms (F, F'), wie einem dynamischen Druck, einem statischen Druck, einer Durchflussmenge und/oder einer Durchflussgeschwindigkeit veränderbar ist, wobei vorzugsweise ein von Null unterschiedlicher minimaler Abstand zwischen dem zweiten Leitelement (11, 11') und dem ersten Leitelement (3, 3'), zwischen dem dritten Leitelement und dem zweiten Leitelement und/oder zwischen dem zweiten dritten Leitelement und dem ersten dritten Leitelement nicht unterschritten wird.

13. Vorrichtung nach einem der vorangehenden Ansprüche, **dadurch gekennzeichnet, dass**
das erste Leitelement (3, 3') zumindest bereichsweise in das zweite Leitelement (11, 11') hineinreicht, das zweite Leitelement (11, 11') zumindest bereichsweise in das erste Leitelement (3, 3') hineinreicht, das zweite Leitelement zumindest bereichsweise in das dritte Leitelement hineinreicht, das dritte Leitelement zumindest bereichsweise in das zweite Leitelement hineinreicht, das erste dritte Leitelement zumindest bereichsweise in das zweite dritte Leitelement hineinreicht und/oder das zweite dritte Leitelement zumindest bereichsweise in das erste dritte Leitelement hineinreicht.

14. Vorrichtung nach einem der vorangehenden Ansprüche, **gekennzeichnet durch** eine Mehrzahl von, insbesondere in der ersten Ebene (E, E') angeordneten, ersten Leitelementen (3, 3'), zweiten Leitelementen (11, 11') und/oder dritten Leitelementen, wobei vorzugsweise zumindest zwei erste Leitelemente (3, 3'), zwei zweite Leitelemente (11, 11') und/oder zwei dritte Leitelemente zumindest bereichsweise in einem ausgebildet sind, insbesondere eine w-förmige Querschnittsform aufweisen.

15. Vorrichtung nach einem der vorangehenden Ansprüche, **dadurch gekennzeichnet, dass**
der Tragrahmen (9, 9'), das erste Leitelement (3, 3'), das zweite Leitelement (11, 11') und/oder das dritte Leitelement zumindest bereichsweise ein Kunststoffmaterial, insbesondere Spritzgussteil umfasst und/oder das erste Leitelement (3, 3'), das zweite Leitelement, das dritte Leitelement und/oder das Rückstellement (5) zumindest ein Metall, vorzugsweise ein Blechmaterial, vorzugweise in Form zumindest eines Blechstanzteils, umfasst bzw. umfassen.

## Claims

1. Device (1, 1') for precipitation of fluid and/or particulate impurities from a fluid stream (F, F') comprising at least one first guiding element (3, 3') and at least a second guiding element (11, 11'), wherein it is possible to impose at least one first change in direction to the fluid stream (F, F') by means of the first guiding element (3, 3') and wherein it is possible to impose at least one second change in direction to the fluid stream (F, F') by means of the second guiding element (11, 11'),
**characterized in that**
the fluid stream (F, F') flows essentially flows in a laminar fashion along the first guiding element (3, 3') and the second guiding element (11, 11') and the device comprises at least one support frame (9, 9') wherein the first guiding element (3, 3') and/or the second guiding element (11, 11') is/are indirectly supported by the support frame (9, 9') such that the first guiding element (3, 3') and/or the second guide element are movably supported relative to the support frame (9, 9') against at least one restoring force established by at least one resetting device (5).

2. Device according to claim 1, **characterized by** at least one third guiding element, preferably a multitude of third guiding elements into which the fluid stream enters after leaving the second guiding element, wherein the fluid stream (F, F') flows essentially flows in a laminar fashion along the third guiding element and wherein it is possible to impose at least one third change in direction to the fluid stream (F, F') by means of the third guiding element, preferably to impose a different third change in direction by means of every third guiding element in comparison with a previous third guiding element.

3. Device according to claim 1 or 2, **characterized in that** the fluid stream (F, F') enters the device (1) essentially along a first direction (R₁, R₁'), the first change in direction causes the fluid stream (F, F') to leave the first guiding element (3, 3') essentially in a second direction (R₂, R₂'), the second change of direction causing the fluid stream (F, F') to leave the second guiding element (11, 11') essentially in a third direction (R₃, R₃') und or the third change in direction causing the fluid stream (F, F') to leave the third guiding element essentially in a fourth direction, preferably at least a first third guiding element in a first fourth direction and at least a second third guiding element in a second fourth direction.

4. Device according to claim 3, **characterized in that** the first direction (R₁, R₁') and the second direction (R₂, R₂'), the second direction (R₂, R₂') and the third direction and/or the first third direction and the second third direction run at an angle between 90° and 180° relative to one another, in particular opposingly parallel, and/or the fluid stream (F, F') exits the device (1, 1') along an outlet direction, in particular the third direction (R₃, R₃'), fourth direction and/or second fourth direction, wherein the outlet direction is preferably parallel to the first direction (R₁, R₁').

5. Device according to one of the preceding claims, **characterized in that** a rotating, swirling or spinning motion is induced in the fluid stream (F, F') during the first change of direction, during the second change of direction and/or during the third change of direction.

6. Device according to one of the preceding claims, **characterized in that** the first guiding element (3, 3') comprises at least one first guiding surface (15, 15'), the second guiding element (11, 11') comprises at least one second guiding surface (17, 17'), and/or the third guiding element comprises at least one third guiding surface, wherein preferably the fluid stream (F, F') enters the first guiding element (3, 3') essentially tangential to the first guiding surface (15, 15'), enters the second guiding element (11, 11') essentially tangential to the second guiding surface (17, 17'), and/or enters the third guiding element essentially tangential to the third guiding surface.

7. Device according to claim 6, **characterized in that**
(i) the first guiding surface (15,15'), the second guiding surface (17,17'), and/or the third guiding surface provides or provide at least sectionally a spherical, elliptic, and/or arched cross sectional shape, preferably at least sectionally the cross sectional sahpe of a circular cylinder, a parabolic cylinder, an elliptic cylinder, and/or an arched surface, and/or
(ii) the first guiding surface (15, 15') provides at least one first bending radius, at least in parts, that the second guiding surface (17, 17') provides at least one second bending radius, at least in parts, and/or that the third guiding surface provides at least one third bending radius, at least in parts, with the first bending radius preferably being equal to the second bending radius, and/or equal to the third bending radius,
the first bending radius being larger than the second bending radius, the second bending radius being larger than the third bending radius, and/or the first bending radius being larger than the third bending radius, or
the first bending radius being smaller than the second bending radius, the second bending radius being smaller than the third bending radius, and/or the first bending radius being smaller than the third bending radius.

8. Device according to one of the preceding claims, **characterized in that** the fluid stream (F, F') flows in a labyrinthian or meandering fashion by means of the first guiding element (3, 3'), the second guiding element (11, 11'), and/or the third guiding element, in particular in a first plane (E, E') oriented essentially perpendicular to a first direction (R₁, R₁').

9. Device according to one of the preceding claims, **characterized by** at least one guiding facility (13, 13'), preferably enclosed by the second guiding element (11, 11'), particularly positioned on a side of the second guiding element (11, 11') that is facing away from the second guiding surface (17, 17'), wherein the guiding facility (13, 13') forces the fluid stream (F, F') into the first direction (R₁, R₁').

10. Device according to one of the preceding claims, **characterized in that**
(i) the first guiding element (3, 3'), the second guiding element (11, 11') and/or the third guiding element is or are arranged essentially in the first plane (E, E'); and/or
(ii) the support frame (9, 9') extends in the first plane (E, E') and/or the third guiding element is at least indirectly supported by the guiding frame (9,9'), wherein preferably
the third guiding element, in particular the first guiding element and/or the second third guiding element, is movably supported against the restoring force established by the resetting device (5,), the resetting device (5) being configured as one piece together with the first guiding element (3, 3'), the second guiding element and/or the third guiding element; and/or the first guiding element (3, 3') is/are supported movably relative to the second guiding element (11, 11'), the third guiding element relative to the second guiding element and/or the second third guiding element relative to the first third guiding element.

11. Device according to one of the preceding claims, **characterized in that** the resetting device comprises at least one spring element (5), preferably a leaf spring, helical spring and/or elastomer spring.

12. Device according one of the preceding claims, **characterized in that** a distance between the second guiding element (11, 11') and the first guiding element (3, 3'), between the third guiding element and the second guiding element, and/or between the second third guiding element and the first third guiding element, preferably adjustable depending on a flow parameter of the fluid stream (F, F'), such as a dynamic pressure, a static pressure, a flow quantity, and/or a flow speed, wherein preferably a minimum distance different to zero between the second guiding element (11, 11') and the first guiding element (3, 3'), between the third guiding element and the second guiding element, and/or between the second third guiding element and the first third guiding element is not undershot.

13. Device according to one of the preceding claims, **characterized in that** the first guiding element extends at least partially into the second guiding element (11, 11'), the second guiding element (11, 11') extends at least partially into the first guiding element (3, 3'), the second guiding element extends at least partially into the third guiding element, the third guiding element extends at least partially into the second guiding element, the first third guiding element at extends at least partially into the second third guiding element, and/or the second third guiding elements extends at least partially into the first third guiding element.

14. Device according to one of the preceding claims, **characterized by** a multitude of of first guiding elements (3, 3'), second guiding elements (11, 11'), and/or third guiding elements arranged in the first plane (E, E'), wherein preferably at least two first guiding elements (3, 3'), two second guiding elements (11, 11'), and/or two third guiding elements are at least sectionally manufactured as one, in particular comprising a w-shaped cross sectional shape.

15. Device according to one of the preceding claims, **characterized in that** the support frame (9, 9'), the first guiding element (3, 3'), the second guiding element (11, 11'), and/or the third guiding element at least sectionally comprises a plastic material, in particular an injection-molded plastic part; and/or that the first guiding element (3, 3'), the second guiding element, the third guiding element, and/or the resetting device (5) comprise or comprises at least one metal preferably sheet metal, preferably in the form of a pressed sheet metal piece.

## Revendications

1. Dispositif (1, 1'), destiné à séparer des impuretés liquides et/ou particulaires d'un flux de fluide (F, F'), comprenant au moins un premier élément conducteur (3, 3') et au moins un deuxième élément conducteur (11, 11'), au moins un premier changement de direction étant imposable au flux de fluide (F, F') au moyen du premier élément conducteur (3, 3') et au moins un deuxième changement de direction étant imposable au flux de fluide (F, F') au moyen du deuxième élément conducteur (11, 11'), **caractérisé en ce que**
le flux de fluide (F, F') s'écoule de manière sensiblement laminaire le long du premier élément conducteur (3, 3') et du deuxième élément conducteur (11, 11') et le dispositif comprend au moins un cadre porteur (9, 9'), le premier élément conducteur (3, 3') et/ou le deuxième élément conducteur (11, 11') étant logé ou logés au moins indirectement sur le cadre porteur (9, 9'), de telle sorte que le premier élément conducteur (3, 3') et/ou le deuxième élément conducteur soit ou soient logé(s) en étant mobile(s) par rapport au cadre porteur (9, 9') à l'encontre d'au moins un force de rappel établie au moyen d'au moins un système de rappel (5).

2. Dispositif selon la revendication 1, **caractérisé par**
au moins un troisième élément conducteur, de préférence une multiplicité de troisièmes éléments conducteurs, dans lesquels le flux de fluide pénètre après avoir quitté le deuxième élément conducteur, au flux de fluide (F, F') étant imposable au moyen du troisième élément conducteur au moins un troisième changement de direction et le flux de fluide (F, F') s'écoulant de manière sensiblement laminaire le long du troisième élément conducteur, de préférence au moyen de chaque troisième élément conducteur étant imposable un troisième changement de direction différent de celui du troisième élément conducteur précédent.

3. Dispositif selon la revendication 1 ou 2, **caractérisé en ce que**
le flux de fluide (F, F') pénètre sensiblement le long d'une première direction (R₁, R₁') dans le dispositif (1, 1'), provoque le premier changement de direction, **en ce que** le flux de fluide (F, F') quitte le premier élément conducteur (3, 3') sensiblement dans une deuxième direction (R₂, R₂'), provoque le deuxième changement de direction, **en ce que** le flux de fluide (F, F') quitte le deuxième élément conducteur (11, 11') sensiblement dans une troisième direction (R₃, R₃') et/ou provoque le troisième changement de direction, **en ce que** le flux de fluide (F, F') quitte le troisième élément conducteur sensiblement dans une quatrième direction, de préférence au moins un premier troisième élément conducteur dans une première quatrième direction et au moins un deuxième troisième élément conducteur dans une deuxième quatrième direction.

4. Dispositif selon la revendication 3, **caractérisé en ce que**
la première direction (R₁, R₁') et la deuxième direction (R₂, R₂'), la deuxième direction (R₂, R₂') et la troisième direction et/ou la première troisième direction et la deuxième troisième direction s'écoulent sous un angle mutuel de 90° à 180°, s'écoulent notamment en parallèle opposée, et/ou **en ce que** le flux de fluide (F, F') quitte le dispositif (1, 1') le long d'une direction de sortie, notamment de la troisième direction (R₃, R₃'), de la quatrième direction et/ou de la deuxième quatrième direction, la direction de sortie s'écoulant de préférence à la parallèle de la première direction (R₁, R₁').

5. Dispositif selon l'une quelconque des revendications précédentes, **caractérisé en ce que**
pendant le premier changement de direction, pendant le deuxième changement de direction et/ou le troisième changement de direction, le flux de fluide (F, F') est amené dans un mouvement de rotation, un mouvement tourbillonnaire et/ou un mouvement tournant.

6. Dispositif selon l'une quelconque des revendications précédentes, **caractérisé en ce que**
le premier élément conducteur (3, 3') comporte au moins une première surface conductrice (15, 15'),
le deuxième élément conducteur (11, 11') comporte au moins une deuxième surface conductrice (17, 17') et/ou le troisième élément conducteur comporte au moins une troisième surface conductrice, de préférence le flux de fluide (F, F') pénétrant de manière sensiblement tangentielle à la première surface conductrice (15, 15') dans le premier élément conducteur (3, 3'), pénétrant de manière sensiblement tangentielle à la deuxième surface conductrice (17, 17') dans le deuxième élément conducteur (11, 11') et/ou pénétrant de manière sensiblement tangentielle à la troisième surface conductrice dans le troisième élément conducteur.

7. Dispositif selon la revendication 6, **caractérisé en ce que**
(i) la première surface conductrice (15, 15'), la deuxième surface conductrice (17, 17') et/ou la troisième surface conductrice comporte au moins par endroits une section transversale de forme sphérique, elliptique, et/ou voûtée, comporte ou comportent au moins par endroits une section transversale de la forme d'un cylindre circulaire, d'un cylindre parabolique, d'un cylindre elliptique et/ou d'une surface voûtée, et/ou
(ii) la première surface conductrice (15, 15') comporte au moins par endroit au moins un premier rayon de courbure, la deuxième surface conductrice (17, 17') comporte au moins par endroits au moins un deuxième rayon de courbure et/ou la troisième surface conductrice comporte au moins par endroits au moins un troisième rayon de courbure, de préférence le premier rayon de courbure étant égal au deuxième rayon de courbure et/ou égal au troisième rayon de courbure,
le premier rayon de courbure est supérieur au deuxième rayon de courbure, le deuxième rayon de courbure est supérieur au troisième rayon de courbure et/ou le premier rayon de courbure est supérieur au troisième rayon de courbure, ou
le premier rayon de courbure est inférieur au deuxième rayon de courbure, le deuxième rayon de courbure est inférieur au troisième rayon de courbure et/ou le premier rayon de courbure est inférieur au troisième rayon de courbure.

8. Dispositif selon l'une quelconque des revendications précédentes, **caractérisé en ce que**
le flux de fluide (F, F') s'écoule au moyen du premier élément conducteur (3, 3'), du deuxième élément conducteur (11, 11') et/ou du troisième élément conducteur, notamment dans un premier plan (E, E') s'écoulant sensiblement à la perpendiculaire de la première direction (R₁, R₁') sous forme de labyrinthe et/ou sous forme de méandres.

9. Dispositif selon l'une quelconque des revendications précédentes, **caractérisé par**
au moins un système conducteur (13, 13') englobé de préférence par le deuxième élément conducteur (11, 11'), placé notamment sur une face du deuxième élément conducteur (11, 11') qui est opposée à la deuxième surface conductrice (17, 17'), le flux de fluide (F, F') étant forcé au moyen du système conducteur (13, 13') dans la première direction (R₁, R₁').

10. Dispositif selon l'une quelconque des revendications précédentes, **caractérisé en ce que**
le premier élément conducteur (3, 3'), le deuxième élément conducteur (11, 11') et/ou le troisième élément conducteur est ou sont placé(s) sensiblement dans le premier plan (E, E'), et/ou
le cadre porteur (9, 9') s'étend dans le premier plan (E, E') et/ou le troisième élément conducteur est ou sont logé(s) au moins indirectement sur le cadre porteur (9, 9'), de préférence
le troisième élément conducteur, notamment le premier troisième élément conducteur et/ou le deuxième troisième élément conducteur est logé en étant mobile contre la force de rappel établie au moyen du système de rappel (5), le système de rappel (5) étant conçu de préférence en monobloc avec le premier élément conducteur (3, 3'), le deuxième élément conducteur et/ou le troisième élément conducteur, et/ou le premier élément conducteur (3, 3') étant logé en étant mobile par rapport au deuxième élément conducteur (11, 11'), le troisième élément conducteur étant logé en étant mobile par rapport au deuxième élément conducteur et/ou le deuxième troisième élément conducteur étant logé en étant mobile par rapport au premier troisième élément.

11. Dispositif selon l'une quelconque des revendications précédentes, **caractérisé en ce que**
le système de rappel comprend au moins un élément à ressort (5), de préférence un ressort à lame, un ressort hélicoïdal et/ou un ressort en élastomère.

12. Dispositif selon l'une quelconque des revendications précédentes, **caractérisé**
**en ce qu'**un écart entre le deuxième élément conducteur (11, 11') et le premier élément conducteur (3, 3'), entre le troisième élément conducteur et le deuxième élément conducteur et/ou entre le deuxième troisième élément conducteur et le premier troisième élément conducteur est variable, de préférence en fonction d'un paramètre de débit du flux de fluide (F, F'), tel qu'une pression dynamique, une pression statique, un taux de débit et/ou une vitesse de débit, de préférence un écart minimal différent de zéro entre le deuxième élément conducteur (11, 11') et le premier élément conducteur (3, 3'), entre le troisième élément conducteur et le deuxième élément conducteur et/ou entre le deuxième troisième élément conducteur et le premier troisième élément conducteur n'étant pas sous-dépassé.

13. Dispositif selon l'une quelconque des revendications précédentes, **caractérisé en ce que**
le premier élément conducteur (3, 3') arrive au moins par endroits à l'intérieur du deuxième élément conducteur (11, 11'), le deuxième élément conducteur (11, 11') arrive au moins par endroits à l'intérieur du premier élément conducteur (3, 3'), le deuxième élément conducteur arrive au moins par endroits à l'intérieur du troisième élément conducteur, le troisième élément conducteur arrive au moins par endroits à l'intérieur du deuxième élément conducteur, le premier troisième élément conducteur arrive au moins par endroits à l'intérieur du deuxième troisième élément conducteur et/ou le deuxième troisième élément conducteur arrive au moins par endroits à l'intérieur du premier troisième élément conducteur.

14. Dispositif selon l'une quelconque des revendications précédentes, **caractérisé par** une multiplicité de premiers éléments conducteurs (3, 3'), de deuxièmes éléments conducteurs (11, 11') et/ou de troisièmes éléments conducteurs, placés notamment dans le premier plan (E, E'), de préférence au moins deux premiers éléments conducteurs (3, 3'), deux deuxièmes éléments conducteurs (11, 11') et/ou deux troisièmes éléments conducteurs étant conçus au moins par endroit en un, comportant notamment une section transversale en forme de W .

15. Dispositif selon l'une quelconque des revendications précédentes, **caractérisé en ce que**
le cadre porteur (9, 9'), le premier élément conducteur (3, 3'), le deuxième élément conducteur (11, 11') et/ou le troisième élément conducteur comprend au moins par endroit une matière plastique, notamment une pièce moulée par injection et/ou le premier élément conducteur (3, 3'), le deuxième élément conducteur, le troisième élément conducteur et/ou l'élément de rappel (5) comprend ou comprennent au moins un métal, de préférence une tôle, de préférence sous la forme d'au moins une pièce découpée dans une tôle.
